# EUROPEAN PATENT SPECIFICATION

(11) **EP 0 382 534 B1**
(45) Date of publication and mention of the grant of the patent: **14.12.1994**
(21) Application number: 90301347.2
(22) Date of filing: 08.02.1990
(51) Int. Cl.: G02F 1/1347, G02F 1/1343, H04N 9/31

(54) **A projection type liquid crystal display apparatus**
Flüssigkristall-Anzeigevorrichtung vom Projektionstyp
Dispositif d'affichage à cristal liquide du type par projection

(30) Priority: 09.02.1989 JP 30703/89
(43) Date of publication of application: 16.08.1990
(73) Proprietor: SHARP KABUSHIKI KAISHA, Osaka 545 (JP)
(72) Inventor: Majima, Kenji, Tenri-shi, Nara-ken (JP)
(74) Representative: Jones, Colin

(56) References cited:
- EP-A- 0 284 372
- US-A- 4 231 640
- PATENT ABSTRACTS OF JAPAN, vol. 13, no. 306 (P-897)[3654], 13th July 1989 ; & JP-A-179 728
- SID 1986 DIGEST, pages 375-378, SID; S. MOROZUMI et al.: "LCD full-color videoprojector"

## Description

The present invention relates to a projection type liquid crystal display apparatus for displaying a large quantity of character information and various other images, and more particularly to a projection liquid crystal display apparatus which projects, onto a screen, light transmitted through a plurality of twisted nematic type liquid crystal layers so as to perform a display of enlarged images.

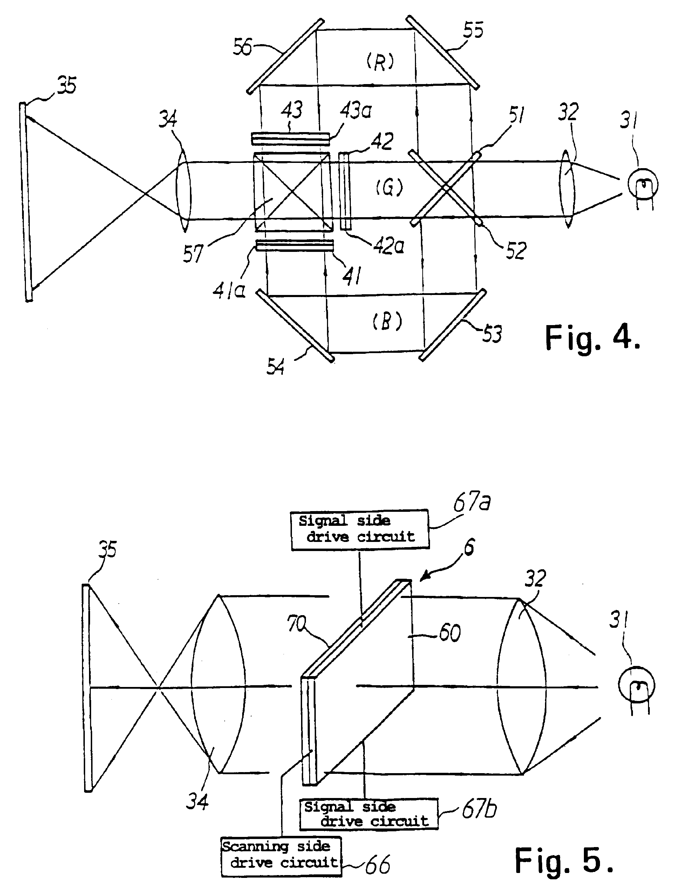

A projection type liquid crystal display apparatus using a plurality of twisted nematic type liquid crystal panels has been developed as a liquid crystal apparatus for displaying a large quantity of character information and/or various images. Fig.5 of the accompanying drawings shows a conventional projection type liquid crystal display apparatus, which has a double-layer liquid crystal display element 6 composed of a pair of laminated liquid crystal panels 60 and 70. Light from a light source 31 enters into a converging lens 32 by which the light is collimated or made parallel and then projected onto the liquid crystal panel 60 in which the light is modulated to a predetermined display pattern which is transmitted to the other liquid crystal panel 70. The light reaches a screen 35 through a projection lens 34 by which an enlarged image is displayed on the screen 35.

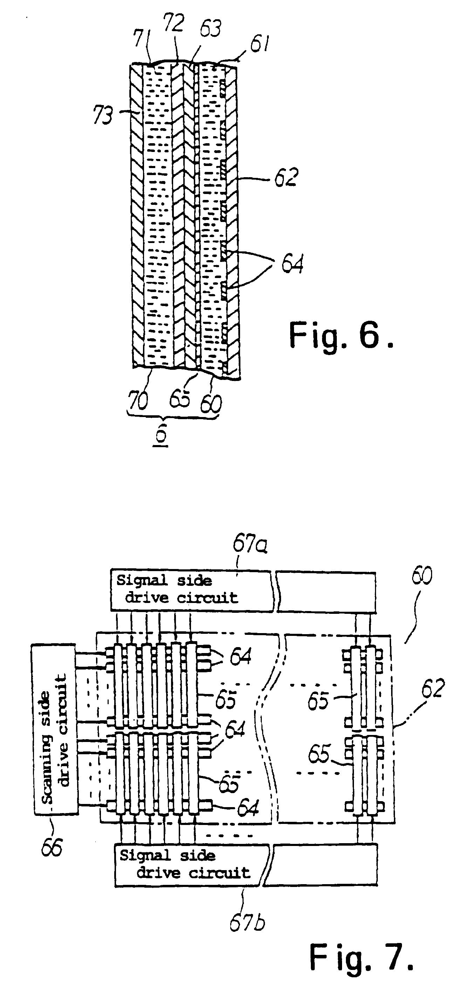

The liquid crystal panel 60 positioned at the light source 31 side, as shown in Fig.6 of the drawings comprises a twisted nematic type liquid crystal layer 61 that is sandwiched between a pair of substrates 62 and 63. The other liquid crystal panel 70 positioned at the screen 35 side comprises a twisted nematic type liquid crystal layer 71 that is sandwiched between a pair of substrates 72 and 73, as well.

The liquid crystal layer 61 in the liquid crystal panel 60 at the light source 31 side is a liquid crystal called an STM (super twisted nematic) or SBE (supertwisted birefringence effect) type whose liquid crystal molecules provide an angle of twist 180° to 270°. The liquid crystal molecules of the liquid crystal layer 71 of the other liquid crystal panel 70 at the screen 85 side is of the STN (or SBE) type that has a twisting direction opposite to that of the liquid crystal molecules of the liquid crystal layer 61 of liquid crystal panel 60. The orientation of the liquid crystal molecules of one of the liquid crystal layers 61 and 71 in the vicinity of the other liquid crystal layer is at an angle of about 90° to that of the liquid crystal molecules of the other liquid crystal layer is in the vicinity of the first liquid crystal layer.

The liquid crystal layer 61 of the liquid crystal panel 60 at the light source 31 side is operated by a multiplex drive. As shown in Fig.7 of the drawings a large number of transparent scanning electrodes 64 that extend parallel to each other are disposed on the substrate 62 which constitutes the liquid crystal panel 60. The respective scanning electrodes 64 are connected to a scanning side drive circuit 66 and are all driven by the drive circuit 66. On the other substrate 63 opposite to the substrate 62 across the liquid crystal layer 61 are disposed a large number of signal electrodes 65 that are positioned so as to be perpendicular to the scanning electrodes 64, respectively. A predetermined voltage is selectively applied to each of the signal electrodes 65 by signal side drive circuits 67a and 67b.

However, on the contrary, the substrates 72 and 73 of the liquid crystal panel 70 disposed at the screen 35 side are not provided with such electrodes. One such projection type liquid crystal display apparatus is disclosed by EP-A-0 284 372.

With such a liquid crystal display apparatus, a voltage is sequentially selectively applied to each of the scanning electrodes 64 of the liquid crystal panel 60 at the light source 31 side by the scanning side drive circuit 66. A voltage is selectively applied to a predetermined signal electrode 65 on the basis of a display pattern by means of a signal side drive circuit 67a or 67b. The transmitted light is modulated in the portion (a picture element) of the liquid crystal layer 61 corresponding to the cross-over of the two electrodes to which a voltage has been applied. The light that has been transmitted through the liquid crystal panel 60 is then transmitted through the liquid crystal panel 70 at the screen 35 side. The liquid crystal panel 70 compensates the coloration of light that has been transmitted through the liquid crystal layer 61 of the liquid crystal panel 60, the coloration being caused by the birefringence effect of the liquid crystal layer 61.

A conventional display apparatus with the above-mentioned structure enables the scanning electrodes 64 to scan in 400 lines by, for example, 1/200 duty drive.

It is required that liquid crystal display apparatuses have picture elements with a high density so as to increase the capacity of display. The above-mentioned conventional liquid crystal display apparatus which contains the aforesaid multiplex drive, when the number of the scanning electrodes are increased, so that the picture elements can be highly densified, creates a problem in that a sufficient voltage is not applied to a picture element of the liquid crystal, and the contrast of the resulting display or the response speed is lowered, resulting in a remarkable deterioration in the display quality. When non-linear devices, such as diodes, or switching devices such as thin film transistors are added to each of the liquid crystal picture elements, the above-mentioned lowering of the contrast or the response speed can be prevented, but an opening ratio, that is a ratio of the area of the picture elements to the area of the display surface of the liquid crystal layer is lowered, which is considered to be disadvantageous in an economical aspect. Moreover, in a direct visual type liquid crystal display apparatus, different from the above-mentioned projection liquid crystal display apparatus, which comprises a plurality of laminated liquid crystal layers each of which is provided with a voltage applying means, parallax arises in each of the display portions of the laminated liquid crystal layers, which makes it impossible to perform a continuous display, causing lowering of the quality of the display. Moreover. a conventional projection liquid crystal display apparatus with the above-mentioned electrode disposition (electrode pattern), gaps exist between the electrodes (between the picture elements), and accordingly it is difficult to obtain a wide opening ratio when the picture elements are highly densified.

Another type of liquid crystal display apparatus comprising two liquid crystal layers is disclosed by US-A-4 231 640.

The projection type liquid crystal display apparatus of this invention comprises a pair of liquid crystal panels arranged in a laminated fashion such that incident light passes through adjacent panels consecutively, each said liquid crystal panel having a twisted or supertwisted nematic type liquid crystal layer and voltage applying means for modulating light that passes through said liquid crystal layer, wherein the twist direction of said liquid crystal layer of a first liquid crystal panel is opposite to that of the liquid crystal layer of an adjacent other liquid crystal panel the orientation of the liquid crystal molecules of said liquid crystal layer of said first liquid crystal panel in the vicinity of said liquid crystal layer of said adjacent other liquid crystal panel is approximately perpendicular to that of the liquid crystal molecules of said liquid crystal layer of said adjacent other liquid crystal panel in the vicinity of said liquid crystal layer of said first liquid crystal panel, said twist directions and liquid crystal molecule orientations being such as to perform birefringence compensation;
characterised in that each of said liquid crystal panels is provided with picture element electrodes so as to form picture elements, said picture elements being disposed in a zigzag or chequered manner and arrangement such that said picture elements of the first liquid crystal panel are not superposed on said picture elements of said adjacent other liquid crystal panel in the direction in which incident light passes through said liquid crystal panels.

In a preferred embodiment, the picture element electrodes comprise a plurality of signal electrodes that are disposed to extend in the same direction on one of a pair of substrates which sandwich therebetween said liquid crystal layer, of each said liquid crystal panels and a plurality of scanning electrodes that are disposed to perpendicularly cross said signal electrodes on the other substrate. Each of said signal electrode has electrode portions that are spaced at a predetermined interval in the extending direction of each of said signal electrodes and are shaped into the shape of one picture element unit; and said electrode portions of said signal electrode shift from the corresponding electrode portions of the adjacent signal electrode to an extent corresponding to one picture element unit in the extending direction of each signal electrode. Said scanning electrodes are disposed in a zigzag manner and sequentially superposed on the corresponding electrode portions of said signal electrodes that are offset from each other in the extending direction of said signal electrodes so as to sandwich said liquid crystal layer therebetween.

In a preferred embodiment, the number of liquid crystal panels is two, so as to constitute one liquid crystal display element, whereby a black-and-white display is performed. Alternatively, the number of liquid crystal panels are six so as to constitute a three liquid crystal display element, whereby a color display is performed.

Thus, the invention described herein makes possible the objectives of (1) providing a projection type liquid crystal display apparatus that has a high opening ratio and an increased display capacity; (2) providing a projection type liquid crystal display apparatus that attains an image display of high resolution; and (3) providing a projection type liquid crystal display apparatus that attains a high quality display.

The invention will be further described by way of example with reference to the accompanying drawings, in which:-
Fig.1 is a fragmentary exploded perspective view showing the portion of a liquid crystal display element of a projection type liquid crystal display apparatus of this invention;
Fig.2 is a schematic diagram showing the projection type liquid crystal display apparatus;
Figs. 3a-3f, respectively, are schematic diagrams showing the positioned relationship between the electrodes and the picture elements of each liquid crystal panel of the liquid crystal display element;
Fig.4 is a schematic diagram showing a color liquid crystal display apparatus of this invention;
Fig.5 is a schematic diagram showing a conventional projection type liquid crystal display apparatus, and has already been described;
Fig.6 is a sectional view showing a liquid crystal display element of the conventional projection type liquid crystal display apparatus of Fig.5; and
Fig.7 is a schematic diagram showing the disposition of the electrode of a liquid crystal panel of the liquid crystal display element of Fig.6.

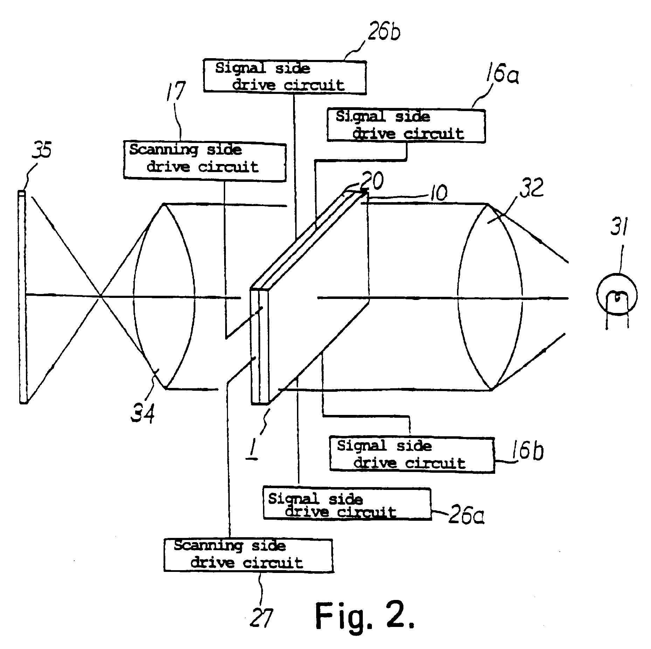

Fig.2 shows a liquid crystal display apparatus of the present invention, which comprises a liquid crystal display element 1 composed of a pair of liquid crystal panels 10 and 20. Light emitted from the light source 31 is made parallel by a converging lens 32 and projected onto the liquid crystal display element 1. The light that is transmitted through the liquid crystal display element is projected onto a screen 35 by a projection lens 34.

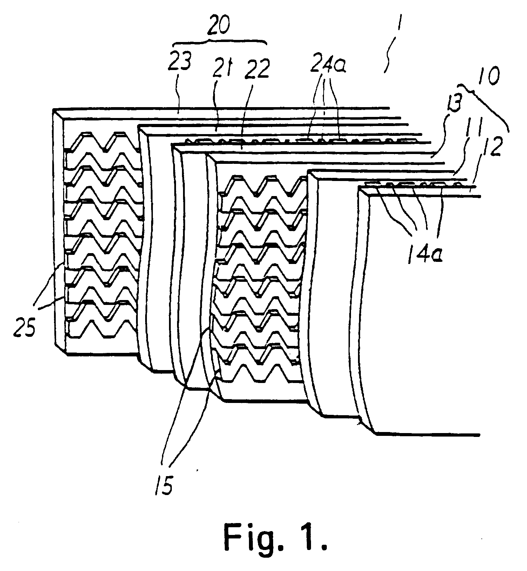

The liquid crystal display element 1, as shown in Figure 1, is so constructed that one liquid crystal panel 10 is disposed vertically at the light source 31 side, the other liquid crystal panel 20 being disposed vertically at the screen 35 side. The liquid crystal panel 10 at the light source 31 side has a twisted nematic liquid crystal layer 11, which is sandwiched between a pair of transparent substrates 12 and 13, the twisted nematic liquid crystal layer 21 at the screen 35 side of the liquid crystal panel 20 being sandwiched between a pair of transparent substrates 22 and 23, as well.

The liquid crystal layer 11 of the liquid crystal panel 10 is of an STN of SBE type having liquid crystal molecules, the angle of twist of which is about 180° to 270°. The liquid crystal layer 21 of the liquid crystal panel 20 is of an STN or SBE type, and the twisting direction of liquid crystal molecule thereof is reverse to that of the liquid crystal layer 11 of the liquid crystal panel 10. The orientation of the liquid crystal molecules of either one of the liquid crystal layers 11 and 21 in the vicinity of the other liquid crystal layer is at an angle of about 90° to that of the liquid crystal molecules of the other liquid crystal layer in the vicinity of the first one. Accordingly, the coloration caused by the birefringence effect of the light that passes through either one of the liquid crystal layers 11 and 21 of the liquid crystal panels 10 and 20 is optically compensated by the liquid crystal layer of the other liquid crystal panel.

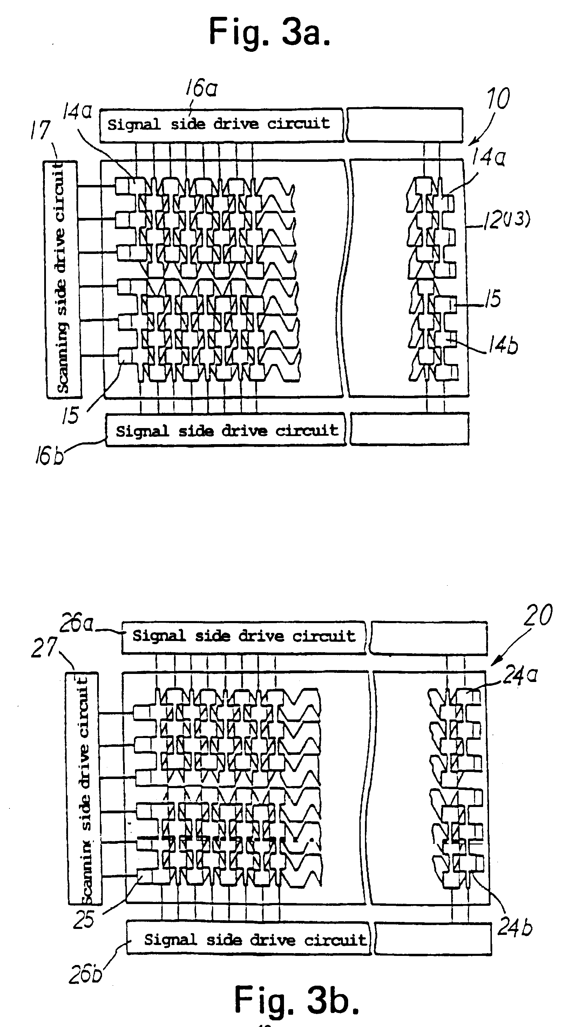

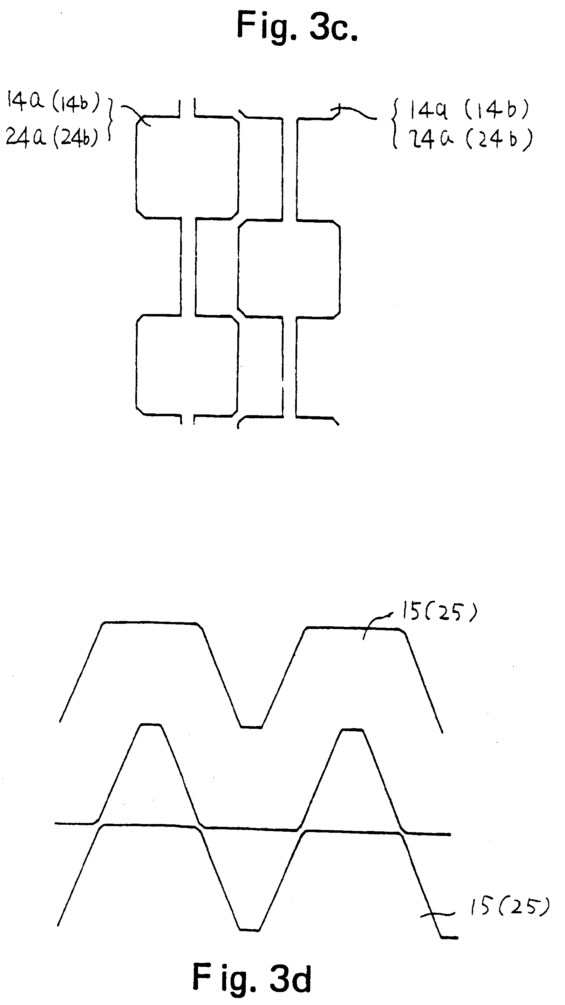

On the substrate 12 at the light incident side of the liquid crystal panel 10 at the light source 31 side, a large number of transparent signal electrodes 14a and 14b, which have shaped extending in the vertical direction such as those shown in Fig.3a, are disposed. Each signal electrode 14a is disposed on the upper half of the surface of the liquid crystal layer 11 of the substrate 12 in such a way that the square electrode portions forming the signal electrode 14a, each of which corresponds to one picture element unit of the liquid crystal layer 11, are vertically staggered with respect to the corresponding electrode portions of the adjacent signal electrode to an extent correspsonding to one picture element unit. The adjacent electrode portions are connected to each other by means of thin wires. Also, the adjacent electrode portions of the signal electrodes 14a, as shown in Fig.3c, are disposed in a chequered manner and are vertically shifted to an extent corresponding to one picture element unit. The other signal electrodes 14b are disposed on the lower half of the substrate so as to line up with the corresponding signal electrodes 14a. The adjacent signal electrodes 14b are connected to each other in a chequered manner by means of thin wires in such a way that square electrode portions forming the signal electrode 14b, each of which corresponds to one picture element, are vertically shifted to an extent corresponding to the said square electrode portion. A voltage is selectively applied to each signal electrode 14a disposed in the upper portion of the substrate 12 by a signal side drive circuit 16a so as to perform a given display. A voltage is also applied selectively to each signal electrodes 14b by a signal side drive circuit 16b so as to perform a given display.

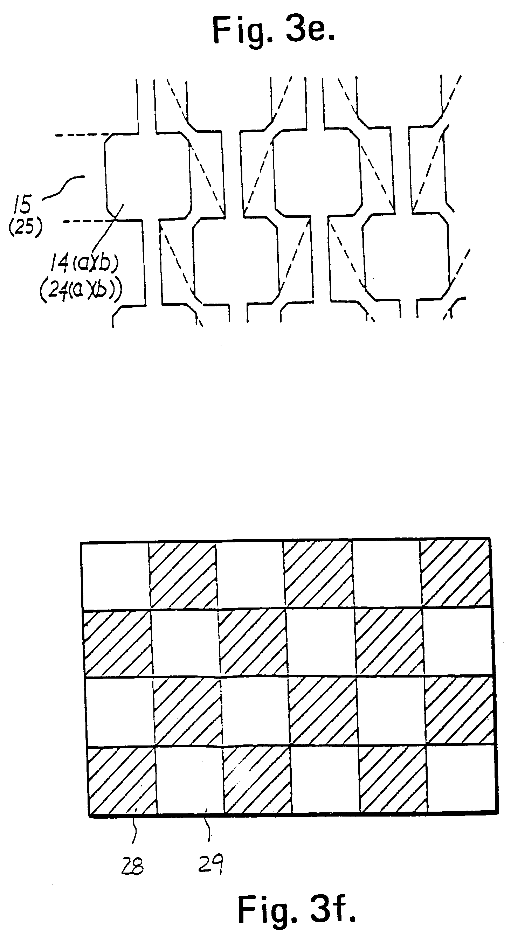

On the surface of the substrate 13 at the liquid crystal layer 11 side that is opposite to the substrate 12 across the liquid crystal layer 11, a large number of scanning electrodes 15, which have shapes such as those shown in Fig.3d, are disposed corresponding to the electrode portions of each of the signal electrodes 14a and 14b, respectively. Each scanning electrode 15 is disposed in a zigzag manner to laterally extend so as to perpendicularly intersect each signal electrode 14a or 14b. The adjacent scanning electrodes 15 are parallel to each other. Fig.3e shows the positional relationship between the signal electrodes 14a and 14b and the scanning electrodes 15, each scanning electrodes 15 being sequentially superposed on the electrode portions of each of the signal electrodes 14a and 14b so as to sandwich the liquid crystal layer 11 therebetween. A voltage is sequentially selectively applied to each scanning electrode 15 by a scanning side drive circuit 17. In this way, a voltage is applied to a portion (a picture element) of the liquid crystal layer 11 that is sandwiched between the scanning electrode 15 of the substrate 13 to which a voltage has been applied and the electrode portion of the signal electrode 14a or 14b of the substrate 12 to which a voltage has been applied, and thus light passing through the picture element is modulated.

On the other hand, the substrate 22 disposed at the light incident side (at the liquid crystal panel 10 side) of the liquid crystal panel 20 is provided with a large number of transparent signal electrodes 24a and 24b that have shapes such as those shown in Fig.3b. The signal electrodes 24a are disposed on the upper half of the substrate 22 at the liquid crystal layer 11 side in the same pattern as that of the signal electrodes 14a (Fig.3c) on the substrate 12 at the light incident side. The signal electrodes 24b are disposed on the lower half of the substrate 22 so as to line up with the correspsonding signal electrodes 24a in the same pattern as that of the signal electrode 14b on the substrate 12 at the light incident side. A voltage is selectively applied to the signal electrodes 24a at the upper portion of the substrate 22 by a signal side drive circuit 26a so as to drive a given display. A voltage is selectively applied to the signal electrodes 24b by a signal side drive circuit 26b so as to drive a given display.

As shown in Fig.1, on the surface of the substrate 23 at the liquid crystal layer 11 side that is opposite to the substrate 22 across the liquid crystal layer 21, a large number of scanning electrodes 25, which have shapes such as those shown in Fig.3d, are disposed corresponding to the electrode portions of each of the signal electrodes 24a and 24b. Each scanning electrode 25 is disposed in a zigzag manner in as the same way as that of each scanning electrode 15 of the substrate 13. Fig.3e shows the positional relationship between the electrodes 24a and 24b and the electrodes 25, in which each scanning electrode 25 is sequentially superposed on the electrode portions of each of the signal electrodes 24a and 24b so as to sandwich the liquid crystal layer 21 therebetween. A voltage is sequentially selectively applied to the scanning electrodes 25 by a scanning side drive circuit 27. In this way, a voltage is applied to a portion (a picture element) of the liquid crystal layer 21 that is sandwiched between the scanning electrode 25 of the substrate 23 to which a voltage has been applied, and the electrode portion of the signal electrode 24a or 24b of the substrate 23 to which a voltage has been applied, and thus light passing through the picture element is modulated.

The electrode portions of each of the signal electrodes 14a and 14b of the liquid crystal panel 10 are not superposed on the electrode portions of each of the signal electrodes 24a and 24b of the liquid crystal panel 20. Accordingly, as shown in Fig.3f, the picture elements 28 of the liquid panel 10 and the picture elements 29 of panel 20 are positioned in a chequered manner and not superposed on each other in the light transmission direction. The picture elements 28 and 29 that are vertically laterally adjacent to each other are picture elements of other liquid crystal panels, respectively.

In the liquid crystal display apparatus having the above-mentioned structure, voltages are applied to given picture elements of the liquid crystal layers 11 and 21 of the liquid crystal panels 10 and 20 by means of the scanning electrodes 15 and 25 and the signal electrodes 14a, 14b, 24a and 24b, and thus light passing through the picture element is modulated. Light emitted from the light source 31 enters in a parallel manner into the liquid crystal element 1 through the converging lens 32 and passes through picture elements of the liquid crystal layers 11 and 21, and then is projected onto the screen 35 by the projection lens 34, resulting in a predetermined image on the screen 35.

Since the picture elements of the liquid crystal layers 11 and 21 to which voltages are applied are not superposed on each other in the light transmitting direction, non-picture element portions of either one of the liquid crystal layers 11 and 21 compensate the optical phase of the picture element of the other liquid crystal layer 21 or 11. Therefore, the coloration of the transmitted light caused by the birefringence effect in the picture element region of the liquid crystal layer 11 at the light source 31 side is optically compensated by the non-picture-element region of the liquid crystal layer 21 at the screen 35 side. Likewise, the coloration caused by the birefringence effect in the non-picture-element region of the liquid crystal layer 11 at light source 31 side is optically compensated in the picture element region of the liquid crystal layer 21, so that an image, the contrast ratio of which is very high, is projected onto the screen 35.

Voltages are individually applied to the scanning electrodes 15 and 25 disposed on the substrates 13 and 23 of the liquid crystal panels 10 and 20 by the scanning side drive circuits 17 and 27 respectively, so that the display capacity can be increased without increasing the number of scanning electrodes of the two liquid crystal panels 10 and 20 beyond that of scanning electrodes of a conventional liquid crystal display element and without lowering the responsiveness.

As a result, the opening ratio of the picture elements becomes high and an image display obtained is bright and superior in contrast.

Although the above-mentioned example only relates to a black-and-white display liquid crystal display apparatus, the present invention is applicable to a color display liquid crystal display apparatus. Fig.4 shows a liquid crystal display for color display of the present invention, in which light from a light source 31 is made parallel by a converging lens 32, enters into a blue reflection type dichroic mirror 51 and a red reflection type dichroic mirror 52, by which the light from the light source is decomposed into blue (B), red (R) and green (G), and split in the three directions. The green (G) light passes through both the dichroic mirrors 51 and 52 and is incident upon a dichroic prism 57 through a liquid crystal display element 42. The blue (B) light is perpendicularly reflected by the dichroic mirror 51, after which the course thereof is changed by reflectors 53 and 54, and is incident upon the dichroic prism 57 through a liquid crystal display element 41. The red (R) light is perpendicularly reflected by the dichroic mirror 52, after which the course thereof is changed by reflectors 55 and 56, and is incident upon the dichroic prism 57 through a liquid crystal display element 43. The liquid crystal display elements 41 to 43 through which the light rays that are incident upon the dichroic prism 57 pass have the same structure as that of the liquid crystal display element 1 shown in Fig.1 and have the same function as that thereof. The respective color light rays that are incident on the dichroic prism 57 through the liquid crystal display elements 41 through 43 are put together by the dichroic prism 57 and then projected onto the screen 35, resulting in a desired color image on the screen 35.

Although the above-mentioned examples only relate to a liquid crystal display element composed of a two-layered display panel, this invention is applicable to a liquid crystal display element composed of two or more sets of a pair of liquid crystal panels in which a portion of the liquid crystal layer corresponding to the voltage applying means of one substrate optically compensates a portion of the liquid crystal layer corresponding to the voltage applying means of the other substrate. In this case, likewise, the voltage applying means of one substrate are not superposed on those of the other substrate in the light transmitting direction, and accordingly, the display capacity can be increased depending upon the number of liquid crystal panel sets without increasing the number of scanning electrodes. Moreover, the above-mentioned examples use a matrix driver type liquid crystal display apparatus; this invention is applied to an active matrix type liquid crystal display apparatus in which an angle of twist of the liquid crystal molecules is about 90°. In this case, the display element is constructed such as that shown in Fig.3f so as to achieve the same effect as mentioned above.

In fact, a two-layered type STN liquid crystal panel that has picture elements of 640 x 400 dots and an angle of twist of 240° was employed to perform an image display, and it was found than an increase in opening ratio was about 40% in comparison with the liquid crystal panel of a conventional electrode pattern and the brightness was also improved with an increase in the opening ratio. Thus, the resulting image was excellent.

As mentioned above, the portions of a plurality of liquid crystal panels of the projection liquid crystal display apparatus of the present invention to which voltage is applied are not superposed on each other in the light transmitting direction. As a result, the display capacity can be increased without increasing the number of scanning electrodes. Moreover the electrodes are disposed in a zigzag or chequered manner, and a gap between the adjacent picture elements in a state that display is carried out is eliminated, so that the opening ratio of the picture elements becomes high and an image display that is bright and superior in contrast can be performed. The resolution of the image is also high.

## Claims

1. A projection type liquid crystal display apparatus comprising a pair of liquid crystal panels (10,20) arranged in a laminated fashion such that incident light passes through adjacent panels consecutively, each said liquid crystal panel having a twisted or supertwisted nematic type liquid crystal layer (11,21) and voltage applying means (16,17,26,27) for modulating light that passes through said liquid crystal layer, wherein the twist direction of said liquid crystal layer (11) of a first liquid crystal panel (10) is opposite to that of the liquid crystal layer (21) of an adjacent other liquid crystal panel (20); the orientation of the liquid crystal molecules of said liquid crystal layer (11) of said first liquid crystal panel (10) in the vicinity of said liquid crystal layer (21) of said adjacent other liquid crystal panel (20) is approximately perpendicular to that of the liquid crystal molecules of said liquid crystal layer (21) of said adjacent other liquid crystal panel (20) in the vicinity of said liquid crystal layer (11) of said first liquid crystal panel (10), said twist directions and liquid crystal molecule orientations being such as to perform birefringence compensation;
characterised in that each of said liquid crystal panels is provided with picture element electrodes (14,15,24,25) so as to form picture elements (28,29) said picture elements (28,29)
being disposed in a zigzag or chequered manner and arrangement such that said picture elements (28) of the first liquid crystal panel (10) are not superposed on said picture elements (29) of said adjacent other liquid crystal panel (20) in the direction in which incident light passes through said liquid crystal panels (10,20).

2. A projection type liquid crystal display apparatus according to claim 1, wherein each said liquid crystal panel (10,20) comprises a pair of substrates that sandwiches therebetween said respective liquid crystal layer (11,21); and said picture element electrodes comprise a plurality of signal electrodes (14,24) disposed to extend in the same direction on a first substrate (12,22) of each pair of substrates and a plurality of scanning electrodes (15,25) disposed to perpendicularly intersect said signal electrodes on the other substrate (13,23) of each respective pair of substrates.

3. A projection type liquid crystal display apparatus according to claim 2, wherein each of said signal electrodes has electrode portions (14a,14b,24a,24b) spaced at a predetermined interval in the extending direction of each said signal electrodes (14,24) and said electrode portions are each shaped into the shape of one picture element (28,29); said electrode portions (14a,14b,24,24b) of said signal electrode are staggered with respect to the corresponding electrode portions of each adjacent signal electrode of the same liquid crystal panel (10,20) to an extent corresponding to one picture element (28,29) in the extending direction of each signal electrode; and said scanning electrodes (15,25) are disposed in a zigzag manner and sequentially arranged so as to superpose on the corresponding said electrode portions (14a,14b,24a,24b) of said signal electrodes of said respective liquid crystal panel (10,20).

4. A projection type liquid crystal display apparatus according to claim 1, 2 or 3, wherein the number of pairs of liquid crystal panels is one, said pair being arranged so as to constitute a black-and-white display consisting of one liquid crystal display element.

5. A projection type liquid crystal display apparatus according to claim 1, 2 or 3, wherein the number of pairs of liquid crystal panels is three, said pairs being arranged so as to constitute a color display consisting of three liquid crystal display elements.

6. A projection type liquid display apparatus according to claim 1, 2 or 3, wherein one or more further pairs of liquid crystal panels are also arranged in a laminated fashion with said first and second liquid crystal panels, the twist directions and liquid crystal molecule orientations of the liquid crystal panels of said further pairs also being such as to perform birefringence compensation, said liquid crystal panels of said further pairs also being provided with picture element electrodes disposed so that said picture element electrodes of each first panel of each said further pair are not superposed on said picture element electrodes of each respective second panel.

## Patentansprüche

1. Flüssigkristall-Anzeigevorrichtung vom Projektionstyp mit einem Paar Flüssigkristalltafeln (10, 20), die auf laminierte Weise so angeordnet sind, daß einfallendes Licht der Reihe nach durch benachbarte Tafeln läuft, wobei jede Flüssigkristalltafel eine verdrillt- oder superverdrilltnematische Flüssigkristallschicht (11, 21) und eine Spannungsanlegeeinrichtung (16, 17, 26, 27) zum Modulieren von Licht aufweist, das durch die Flüssigkristallschicht läuft, wobei die Verdrillungsrichtung der Flüssigkristallschicht (11) einer ersten Flüssigkristalltafel (10) derjenigen der Flüssigkristallschicht (21) in der benachbarten anderen Flüssigkristalltafel (20) entgegengesetzt ist; wobei die Ausrichtung der Flüssigkristallmoleküle der Flüssigkristallschicht (11) der ersten Flüssigkristalltafel (10) in der Nähe der Flüssigkristallschicht (21) der benachbarten anderen Flüssigkristalltafel (20) ungefähr rechtwinklig zu derjenigen der Flüssigkristallmoleküle der Flüssigkristallschicht (21) der benachbarten anderen Flüssigkristalltafel (20) in der Nähe der Flüssigkristallschicht (11) der ersten Flüssigkristalltafel (10) steht, wobei die Verdrillungsrichtungen und die Flüssigkristallmolekül-Ausrichtungen dergestalt sind, daß Doppelbrechungskompensation erzielt wird;
**dadurch gekennzeichnet, daß** jede Flüssigkristalltafel mit Bildelementelektroden (14, 15, 24, 25) versehen ist, um Bildelemente (28, 29) zu bilden, wobei diese Bildelemente (28, 29) zickzackförmig oder schachbrettförmig ausgebildet und so angeordnet sind, daß die Bildelemente (28) der ersten Flüssigkristalltafel (10) in der Richtung, in der das einfallende Licht durch die Flüssigkristalltafeln (10, 20) läuft, nicht über den Bildelementen (29) der benachbarten anderen Flüssigkristalltafel (20) liegen.

2. Flüssigkristall-Anzeigevorrichtung nach Anspruch 1, bei der jede Flüssigkristalltafel (10, 20) ein Paar Substrate aufweist, die zwischen sich die jeweilige Flüssigkristallschicht (11, 21) einbetten, und bei der die Bildelektroden mehrere Signalelektroden (14, 24), die so angeordnet sind, daß sie sich auf einem ersten Substrat (12, 22) jedes Substratpaars in derselben Richtung erstrecken, und mehrere Abrasterelektroden (15, 25) aufweisen, die auf dem anderen Substrat (13, 23) jedes jeweiligen Substratpaars so angeordnet sind, daß sie die Signalelektroden rechtwinklig schneiden.

3. Flüssigkristall-Anzeigevorrichtung vom Projektionstyp nach Anspruch 2, bei der jede der Signalelektroden über Elektrodenabschnitte (14a, 14b, 24a, 24b) verfügt, die mit einem vorgegebenen Intervall in der Erstreckungsrichtung jeder der Signalelektroden (14, 24) beabstandet sind, und bei der die Elektrodenabschnitte jeweils in der Form eines Bildelements (28, 29) geformt sind; wobei die Elektrodenabschnitte (14a, 14b, 24a, 24b) der Signalelektroden in bezug auf die entsprechenden Elektrodenabschnitte jeder benachbarten Signalelektrode derselben Flüssigkristalltafel (10, 20) mit einem Ausmaß versetzt sind, das einem Bildelement (28, 29) in der Erstreckungsrichtung jeder Signalelektrode entspricht; und wobei die Abrasterelektroden (15, 25) zickzackförmig und aufeinanderfolgend so angeordnet sind, daß sie über den entsprechenden Elektrodenabschnitten (14a, 14b, 24a, 24b) der Signalelektroden der jeweiligen Flüssigkristalltafel (10, 20) liegen.

4. Flüssigkristall-Anzeigevorrichtung vom Projektionstyp nach einem der Ansprüche 1, 2 oder 3, bei der die Anzahl von Paaren von Flüssigkristalltafeln eins ist, wobei das Paar so ausgebildet ist, daß es eine Schwarz/Weiß-Anzeige bildet, die aus einem Flüssigkristall-Anzeigeelement besteht.

5. Flüssigkristall-Anzeigevorrichtung vom Projektionstyp nach einem der Ansprüche 1, 2 oder 3, bei der die Anzahl von Paaren von Flüssigkristalltafeln drei ist, wobei die Paare so angeordnet sind, daß sie eine Farbanzeige bilden, die aus drei Flüssigkristall-Anzeigeelementen besteht.

6. Flüssigkristall-Anzeigevorrichtung vom Projektionstyp nach einem der Ansprüche 1, 2 oder 3, bei der ein weiteres Paar Flüssigkristalltafeln oder mehrere ebenfalls auf laminierte Weise mit der ersten und zweiten Flüssigkristalltafel angeordnet sind, wobei die Verdrillungsrichtungen und die Flüssigkristallmolekül-Ausrichtungen der Flüssigkristalltafeln der weiteren Paare ebenfalls dergestalt sind, daß Doppelbrechungskompensation ausgeführt wird, wobei die Flüssigkristalltafeln der weiteren Paare ebenfalls mit Bildelementelektroden versehen sind, die so angeordnet sind, daß die Bildelementelektroden jeder ersten Tafel jedes weiteren Paars nicht über den Bildelementelektroden jeder entsprechenden zweiten Tafel liegen.

## Revendications

1. Dispositif d'affichage à cristaux liquides du type par projection, comprenant une paire de panneaux à cristaux liquides (10, 20) agencés sous la forme d'un stratifié, de telle façon que la lumière incidente traverse successivement des panneaux adjacents, chacun desdits panneaux à cristaux liquides comportant une couche de cristaux liquides de type nématique en hélice ou en super-hélice (11, 21) et des moyens d'application d'une tension (16, 17, 26, 27) servant à moduler la lumière qui traverse ladite couche de cristaux liquides, dispositif dans lequel le sens de torsion de l'hélice de ladite couche de cristaux liquides (11) d'un premier panneau à cristaux liquides (10) est opposé à celui de la couche de cristaux liquides (21) d'un second panneau à cristaux liquides adjacent (20); l'orientation des molécules de cristaux liquides de ladite couche de cristaux liquides (11) dudit premier panneau à cristaux liquides (10), au voisinage de ladite couche de cristaux liquides (21) dudit second panneau à cristaux liquides adjacent (20), est approximativement perpendiculaire à celle des molécules de cristaux liquides de ladite couche de cristaux liquides (21) dudit second panneau à cristaux liquides adjacent (20) au voisinage de ladite couche de cristaux liquides (11) dudit premier panneau à cristaux liquides (10), lesdits sens de torsion des hélices et lesdites orientations des molécules de cristaux liquides étant tels qu'ils réalisent une compensation de biréfringence;
caractérisé en ce que chacun desdits panneaux à cristaux liquides est pourvu d'électrodes d'élément d'image (14, 15, 24, 25) de façon à former des éléments d'image (28, 29), lesdits éléments d'image (28, 29) étant disposés à la manière et selon un agencement en zigzag ou en damier, de telle façon que lesdits éléments d'image (28) du premier panneau à cristaux liquides (10) ne soient pas superposés auxdits éléments d'image (29) dudit second panneau à cristaux liquides adjacent (20) dans la direction dans laquelle la lumière incidente traverse lesdits panneaux à cristaux liquides (10, 20).

2. Dispositif d'affichage à cristaux liquides du type par projection selon la revendication 1, dans lequel chacun desdits panneaux à cristaux liquides (10, 20) comprend une paire de substrats retenant en sandwich entre eux ladite couche respective de cristaux liquides (11, 21); et lesdites électrodes d'élément d'image comprennent plusieurs électrodes de signal (14, 24), disposées de manière à s'étendre dans la même direction sur un premier substrat (12, 22) de chacune des paires de substrats, et plusieurs électrodes de balayage (15, 25) disposées, de manière à croiser à angle droit lesdites électrodes de signal, sur le second substrat (13, 23) de chaque paire respective de substrats.

3. Dispositif d'affichage à cristaux liquides du type par projection selon la revendication 2, dans lequel chacune desdites électrodes de signal présente des tronçons d'électrode (14a, 14b, 24a, 24b) répartis, selon un intervalle prédéterminé, dans la direction dans laquelle s'étend chacune desdites électrodes de signal (14, 24), et lesdits tronçons d'électrode sont chacun mis sous la forme d'un élément d'image (28, 29); lesdits tronçons d'électrode (14a, 14b, 24a, 24b) de ladite électrode de signal sont disposés en quinconce par rapport aux tronçons d'électrode correspondants de chaque électrode de signal adjacente du même panneau à cristaux liquides (10, 20) selon un décalage correspondant à un élément d'image (28, 29) dans la direction dans laquelle s'étend chacune des électrodes de signal; et lesdites électrodes de balayage (15, 25) sont disposées en zigzag et agencées successivement de façon à venir se superposer auxdits tronçons d'électrode correspondants (14a, 14b, 24a, 24b) desdites électrodes de signal dudit panneau à cristaux liquides respectif (10, 20).

4. Dispositif d'affichage à cristaux liquides du type par projection selon la revendication 1, 2 ou 3, dans lequel le nombre de paires de panneaux à cristaux liquides est de un, ladite paire étant aménagée pour constituer un afficheur en noir et blanc comprenant un seul élément d'affichage à cristaux liquides.

5. Dispositif d'affichage à cristaux liquides du type par projection selon la revendication 1, 2 ou 3, dans lequel le nombre de paires de panneaux à cristaux liquides est de trois, lesdites paires étant aménagées de façon à constituer un afficheur en couleurs comprenant trois éléments d'affichage à cristaux liquides.

6. Dispositif d'affichage à cristaux liquides du type par projection selon la revendication 1, 2 ou 3, dans lequel une ou plusieurs paires supplémentaires de panneaux à cristaux liquides sont également agencées sous la forme d'un stratifié conjointement avec lesdits premier et second panneaux à cristaux liquides, les sens de torsion des hélices et les orientations des molécules de cristaux liquides des panneaux à cristaux liquides desdites paires supplémentaires étant aussi tels qu'ils réalisent une compensation de biréfringence, lesdits panneaux à cristaux liquides desdites paires supplémentaires étant également pourvus d'électrodes d'élément d'image disposées de telle façon que lesdites électrodes d'élément d'image de chaque premier panneau de chacune desdites paires supplémentaires ne soient pas superposées auxdites électrodes d'élément d'image de chaque second panneau respectif.
